# EUROPÄISCHE PATENTANMELDUNG

(11) **EP 4 470 949 A1**
(43) Veröffentlichungstag der Anmeldung: **04.12.2024**
(21) Anmeldenummer: 23176944.9
(22) Anmeldetag: 02.06.2023
(51) Int. Cl.: B65G 21/10, B65G 41/00, B65G 67/24

(54) **FÖRDERER ZUM ENTLADEN VON GESTAPELTEM, GESCHÜTTETEM ODER LOSE GEHÄUFTEM STÜCKGUT AUS EINEM LADERAUM**

(71) Anmelder: BEUMER Group GmbH & Co. KG, 59269 Beckum (DE)
(72) Erfinder: ROSENBERG, Jens, 8230 Åbyhøj (DK); BAYEN, Brecht, 3665 As (BE)
(74) Vertreter: Angerhausen, Christoph

(57) **Zusammenfassung**

Die Erfindung betrifft einen Förderer (1) zum Entladen von auf einem Boden eines Laderaums (9) gestapeltem, geschüttetem, oder lose gehäuftem Stückgut (6), mit einem Aufnahmeförderer (2), der ein höhenverstellbares Aufnahmeende (22) aufweist, einem Abförderer (3) und einem zwischen dem Aufnahmeförderer (2) und dem Abförderer (3) angeordneten Übergabeförderer (4), dadurch gekennzeichnet, dass zumindest der Aufnahmeförderer (2) als Fahrzeug (5) oder als Flurförderzeug ausgebildet ist.

## Beschreibung

Die Erfindung geht aus von einem Förderer zum Entladen von auf einem Boden eines Laderaums gestapeltem, geschüttetem oder lose gehäuftem Stückgut, wobei der Förderer einen Aufnahmeförderer mit einem höhenverstellbaren Aufnahmeende aufweist. Der Förderer weist weiterhin einen Abförderer und einen zwischen dem Aufnahmeförderer und dem Abförderer angeordneten Übergabeförderer. Ein derartiger Förderer ist aus der EP 2 665 666 B1 bekannt.

Derartige Förderer werden beispielsweise für die Entladung von Speditionscontainern, etwa Überseecontainern, verwendet. Diese sind zur Minimierung der Logistikkosten maximal gefüllt, beispielsweise mit dicht gepackten Kartons. Für die Entladung des Containers ist es bekannt, den Förderer beispielsweise mit einem Gabelstapler anzuheben derart dem zu entladenden Container anzunähern beziehungsweise in den Container einzubringen, dass dieser zumindest mit seinem distalen, höhenverstellbaren Aufnahmeende in den Zugriffsbereich der zu entladenden Stückgüter, beispielsweise Pakete, gelangt. Mit einem Picker können schwer zugängliche Stückgüter von einem Bediener dem Aufnahmeförderer zugeführt werden. Alternativ kann der Aufnahmeförderer, beispielsweise wenn dieser im Wesentlichen als ein Bandförderer mit einem oder mehreren Förderbändern, ausgebildet ist, aufgrund der Haftreibung die Stückgüter selbstständig aufnehmen.

In großen Logistikzentren sind in der Regel mehrere Entladestellen für das Entladen von Überseecontainern, Sattelzügen und dergleichen vorgesehen, wobei an jeder Entladestelle ein eigener Förderer vorgesehen ist, der stromabseitig mit einem Abförderer, beispielsweise einem Rollenbahnförderer verbunden ist, von wo aus die Stückgüter beispielsweise in einem Umlaufsorter eingespeist werden. Die Auslastung der Entladestelle ist jedoch ungleichmäßig, so dass häufig die Förderer untätig auf die Ankunft eines weiteren Containers, Sattelzugs oder dergleichen warten, so dass unnötige Kosten entstehen.

Es ist daher die Aufgabe der Erfindung, einen Förderer der eingangs beschriebenen Art derart weiterzuentwickeln, dass er mehrere Entladestellen eines Logistikzentrums oder dergleichen bedienen kann.

Diese Aufgabe wird durch einen Förderer mit den Merkmalen des Anspruchs 1 gelöst. Vorteilhafte Ausführungsformen der Erfindung sind jeweils Gegenstand der abhängigen Ansprüche.

Demgemäß ist vorgesehen, dass zumindest der Aufnahmeförderer als Fahrzeug oder als Flurförderzeug ausgebildet ist. Dadurch wird erreicht, dass der Förderer in Abhängigkeit des Aufkommens des zu entladenden Stückguts an den verschiedenen Entladestellen flexibel zwischen den Entladestellen manövriert werden kann. Es muss somit nicht mehr für jede Ladestation ein separater Förderer vorgesehen sein.

Das Fahrzeug oder das Flurförderzeug kann den Übergabeförderer aufweisen. Zumindest der Aufnahmeförderer und der Übergabeförderer können als Fahrzeug oder als Flurförderzeug ausgebildet sein.

Das Fahrzeug oder das Flurförderzeug kann mindestens eine Antriebs- oder Lenkeinheit mit mindestens einem angetriebenen Rad aufweisen, auf dem das Fahrzeug oder das Flurförderzeug abrollt. Vorzugsweise weist das Fahrzeug oder das Flurförderzeug mindestens drei Räder auf, von denen wenigstens eines über die zuvor beschriebene Antriebs- und Lenkeinheit verfügt.

Das Rad kann einen einstellbaren Lenkwinkel aufweisen, wobei ein Winkelbereich, innerhalb welches der Lenkwinkel einstellbar sein kann, vorzugsweise wenigstens 90° und besonders bevorzugt mehr als 90° und bis zu 180° beträgt.

Das mindestens eine angetriebene Rad der Antriebs- und Lenkeinheit kann von einem Elektromotor angetrieben sein. Dabei kann der Förderer einen elektrischen Energiespeicher aufweisen, so dass der Elektromotor für den Antrieb des Rads unabhängig von einer externen Energiequelle des Förderers betrieben werden kann. Dadurch wird ermöglicht, dass der Förderer bei der Umlagerung von einer ersten Entladestelle zur zweiten Entladestelle von seiner Netzstromversorgung für den Betrieb des Aufnahmeförderers, des Abförderers und des Übergabeförderers und ggf. weiterer elektrisch betriebener Funktionen des Förderers getrennt werden kann und dennoch manövrierfähig ist.

Vorzugsweise ist der Abförderer ein mobiler Flex-Conveyor, beispielsweise eine mobile Scherenrollbahn. Der Flex-Conveyor kann in Schleppverbindung mit dem von dem Aufnahmeförderer und dem Übergabeförderer gebildeten Fahrzeug oder Flurförderzeug stehen. Diese Ausführungsform ermöglicht es, dass der Abförderer während des Transports des Förderers von einer ersten Entnahmestelle zur einer zweiten Entnahmestelle in einem Logistikzentrum oder dergleichen mit dem von dem Aufnahmeförderer und dem Übergabeförderer gebildeten Fahrzeug oder Flurförderzeug in Verbindung stehen bleiben kann, indem der gegebenenfalls sogar selbst nicht angetriebene Flex-Conveyor von dem Fahrzeug oder Flurförderzeug in eine neue Ausrichtung geschleppt wird, wenn das Fahrzeug oder Flurförderzeug zwischen der ersten und der zweiten Entnahmestelle manövriert wird.

Der Übergabeförderer kann in seiner Förderrichtung stromabwärts unmittelbar angrenzen an eine stromabwärtsseitige Umlenkrolle eines Fördermittels, beispielsweise eines Bandförderers und/oder einer Rollenbahn, des Übergabeförderers. Das Fahrzeug kann eine Kupplung zur Verbindung des Abförderers mit dem Übergabeförderer aufweisen, wobei die Kupplung als ein starr mit dem Übergabeförderer verbundener Rollenbahnabschnitt mit mindestens einer angetriebenen oder unangetriebenen Tragrolle oder Leichtrolle ausgebildet sein kann. Dies ermöglicht es, dass der Abförderer zur Herstellung der Schleppverbindung lediglich in den Rollenbahnabschnitt eingehängt werden muss.

Der starr mit dem Übergabeförderer verbundene Rollenbahnabschnitt kann in Förderrichtung des Übergabeförderers von dem Übergabeförderer vorstehen und an einem distalen Ende mindestens eine Stützrolle aufweisen. Über die Stützrolle kann der Rollenbahnabschnitt auf einem Untergrund, beispielsweise auf einem Hallenboden, abgestützt sein und beim Manövrieren des Förderers zwischen verschiedenen Entnahmestellen abrollen.

Der Abförderer kann angetrieben oder antriebslos sein. Beispielsweise kann der Abförderer eine Scherenrollenbahn mit angetriebenen und/oder antriebslosen Tragrollen oder Leichtrollen sein oder aufweisen.

Der Abförderer, vorzugsweise eine oder die Scherenrollenbahn, kann eine Mehrzahl Lenkrollen aufweisen, mit Hilfe welcher der Abförderer verfahrbar ist, wobei die Lenkrollen vorzugsweise antriebslos sind. Die Lenkrollen können antriebslos sein, da der Abförderer bei einer bevorzugten Ausführungsform der Erfindung von dem Fahrzeug und/oder durch die Kupplung geschleppt werden kann.

In einigen Ausführungsformen kann der Abförderer eines oder mehrere Seitenführungselemente, z.B. einen oder mehrere Gurte, eine oder mehrere Rollen, und/oder eines oder mehrere Gleitelemente aufweisen. Das Seitenführungselement kann ein Herunterfallen von Stückgut verhindern. Ein oder das Seitenführungselement kann von dem Abförderer transportiertes Stückgut seitlich kontaktieren und/oder führen.

Das höhenverstellbare Aufnahmeende kann in einer Förderrichtung des Aufnahmeendes teleskopierbar sein. In einigen Ausführungsformen kann eine Breiteneinstellmöglichkeit des Aufnahmeendes vorgesehen sein, und/oder das Aufnahmeende breitenverstellbar sein. Damit kann z.B. für verschiedene Laderaumbreiten eine möglichst breite Aufnahmefläche ermöglicht sein oder werden.

Das höhenverstellbare Aufnahmeende kann mindestens ein Paar von in einer Förderrichtung des Aufnahmeendes hintereinander und überlappend angeordneten Förderbändern aufweisen.

Das höhenverstellbare Aufnahmeende kann in einem Überlappungsbereich des mindestens einen Paars hintereinander und überlappend angeordneter Förderbänder eine in der Förderrichtung abfallende Stufe aufweisen. Die abfallende Stufe kann dazu dienen, auf dem Förderband übereinander angeordnete Stückgüter zu vereinzeln.

Die Förderbänder können eine konstante Länge aufweisen und in der Förderrichtung relativ zueinander verstellbar sein, so dass eine Länge des Aufnahmeendes in der Förderrichtung einstellbar ist.

Die Einheit aus Aufnahmeförderer, Abförderer und Übergabeförderer, und/oder der Förderer, kann eine Mehrzahl Bandförderer und/oder angetriebene Rollenbahnen aufweisen, von denen zumindest einige kaskadenförmig zueinander angeordnet sind.

Zumindest einige der Bandförderer, vorzugsweise sämtliche der Bahnförderer, können in einer Förderrichtung der Bandförderer kaskadenförmig abfallend zueinander angeordnet sein.

Der Übergabeförderer und/oder der Aufnahmeförderer können jeweils oder in Summe mehrere Fördermittel, vorzugsweise Bandförderer, aufweisen, wobei die Fördermittel zumindest teilweise in einer Förderrichtung der Fördermittel hintereinander angeordnet sind. Dabei kann eine Fördergeschwindigkeit von mindestens zwei der Fördermittel unabhängig voneinander einstellbar sein, wobei vorzugsweise das in der Förderrichtung weiter stromabwärts angeordnete Fördermittel eine höhere Fördergeschwindigkeit als das in der Förderrichtung weiter stromaufwärts angeordnete Fördermittel aufweisen kann.

In einigen Ausführungsformen kann ein Einstellen der Fördergeschwindigkeit und/oder eine Steuerung mindestens eines Fördermittels manuell durch einen Bediener erfolgen. Alternativ oder zusätzlich kann vorgesehen sein, dass die Fördergeschwindigkeit und/oder mindestens eines, mehrerer oder aller Fördermittel von einer Steuereinheit gesteuert sein oder werden kann. Beispielsweise kann eines, mehrerer oder aller Fördermittel basierend auf einem Packverhalten angesteuert sein oder werden. Es kann mindestens ein Sensor und/oder eine Sensoranordnung vorgesehen sein, anhand dessen das Packverhalten bestimmt sein oder werden kann, z.B. durch die Steuereinheit. Der Sensor und/oder die Sensoranordnung kann z.B. eine oder mehrere Kameras, eine oder mehrere Lichtschranken, oder dergleichen, sein oder aufweisen. In einigen Ausführungsformen kann vorgesehen sein, dass der Sensor und/oder die Sensoranordnung beispielsweise einen oder den Laderaum erfassen kann. In einigen Ausführungsformen kann vorgesehen sein, dass der Sensor und/oder die Sensoranordnung beispielsweise den Abförderer, den Aufnahmeförderer, den Übergabeförderer, das Flurförderzeug, und/oder mindestens ein Fördermittel erfassen kann. In einigen Ausführungsformen kann der Sensor und/oder die Sensoranordnung eine Füllungsbeschaffenheit des Laderaums, Abförderers, des Aufnahmeförderers, des Übergabeförderers, des Flurförderzeugs, und/oder mindestens eines der Fördermittel mit Stückgut erfassen.

Bei einer Ausführungsform können mindestens drei der Fördermittel in der Förderrichtung hintereinander angeordnet sein, wobei die jeweilige Fördergeschwindigkeit der mindestens drei Fördermittel in der Förderrichtung ansteigend sein kann.

Der Aufnahmeförderer kann einen Bandförderer mit mindestens einem umlaufenden Band, vorzugsweise mit mehreren umlaufenden Bändern, aufweisen und an seinem distalen und/oder freien Ende eine angetriebene Aufnehmerwalze aufweisen. In einigen Ausführungsformen kann alternativ oder zusätzlich das freie Ende des Aufnehmers einen umlaufenden Gurt oder eine Vorrichtung aufweisen Mitnehmerelementen, Saugelementen und/oder Greifvorrichtungen aufweisen. Es können seitliche Führungselemente vorgesehen sein, z.B. an den Außenkanten des Aufnahmeförderers, die ein Herunterfallen geförderter Stückgüter verhindern können.

In einer weiteren Ausführungsform können die seitlichen Führungselemente eigenständige Bandförderer sein, die den manuellen Picking-Prozess unterstützen können, indem sie z.B. gestapelte Pakete seitlich durch Reibung aus dem Ladungsverbund herauslösen können.

Die Aufnehmerwalze kann unabhängig von dem Bandförderer des Aufnahmeförderers angetrieben sein und vorzugsweise an ihrem Walzenmantel eine Strukturierung zur Erhöhung des Reibwerts des Walzenmantels aufweisen. Die Strukturierung kann beispielsweise rautenförmige Rillen aufweisen.

Der Aufnahmeförderer und/oder der Übergabeförderer kann parallel zur Förderrichtung mehrere nebeneinandergeordnete, unabhängig voneinander angetriebene Fördermittel aufweisen. Die Fördermittel können beispielsweise Bandförderer sein. Die Fördermittel können eine unabhängig voneinander einstellbare Fördergeschwindigkeit in der Förderrichtung aufweisen.

Der Förderer kann dazu eingerichtet sein, bei einem erfassten Stau von zu transportierenden Stückgütern oder einer erfassten Überladung mit zu transportierenden Stückgütern eine Relativgeschwindigkeit der mehreren nebeneinander angeordneten Fördermittel zu erhöhen. Dadurch können die Stückgüter auseinandergezogen, mithin separiert und/oder vereinzelt werden.

Der Förderer kann dazu eingerichtet sein, bei einem erfassten Stau auf dem Übergabeförderer von zu transportierenden Stückgütern oder einer erfassten Überladung des Übergabeförderers mit zu transportierenden Stückgütern eine Fördergeschwindigkeit des Aufnahmeförderers zu verringern oder zeitweise auf null herabzusetzen. Alternativ oder zusätzlich kann die Fördergeschwindigkeit aus negativ sein oder werden, und/oder ein Rückwärtslauf vorgesehen sein und/oder vorgegeben werden. Dadurch kann sichergestellt werden, dass die an den Abförderer übergebene Stückgutmenge über die Zeit vergleichsweise konstant bleibt und demgemäß ein Sorter-System, welches von dem Abförderer gespeist wird, beispielsweise ein Umlaufsorter, einen konstanten Stückgutstromzufluss erfährt. Zudem kann ein Rückstau aufgelöst werden, z.B. durch eine negative Fördergeschwindigkeit und/oder einen Rücklauf.

Der Förderer kann für die Stauerfassung oder die Erfassung einer Überladung mindestens eine Objekterkennung, vorzugsweise mindestens eine Kamera mit einer Bildverarbeitung, aufweisen. Die Objekterkennung kann dazu eingerichtet sein, wenigstens einen Übergangsbereich zwischen dem Aufnahmeförderer und dem Übergabeförderer zu überwachen. Es kann vorgesehen sein, dass die Objekterkennung dem mindestens einen Sensor und/oder der Sensoranordnung entsprechen oder sein kann, und/oder den mindestens einen Sensor und/oder die Sensoranordnung aufweisen kann.

Es kann vorgesehen sein, dass nur eine Lage und/oder Beschaffenheit der Stückgüter Beschaffenheit vor der Aufnahme auf den Förderer zur Förderersteuerung erfasst sein oder werden kann, und/oder der Fördersteuerung dienen kann. Beispielsweise können Bedienerhinweise in Form von Anweisungen auf einem Bedien-Display, akustischen Signalen oder auch (Laser-)Projektionen auf die zu entladenden Stückgüter erzeugt sein oder werden, die eine effizienten Entladebetrieb unterstützen können.

Das Fahrzeug kann dazu eingerichtet sein, vollautomatisch und/oder halbautomatisch verfahren zu werden. In einigen Ausführungsformen kann ein Betriebsmodus des Fahrzeugs, und/oder ein Fahrmodus des Fahrzeugs, zwischen einem vollautomatischen und einem halbautomatischen Betrieb umgeschaltet sein oder werden.

Der Förderer und/oder das Fahrzeug kann eine Sensorik aufweisen, die dazu eingerichtet sein kann, Hindernisse zu erfassen und/oder zu erkennen. Die Hindernisse können beispielsweise Wände, Container, Personen, und/oder Stückgut sein oder umfassen. In einigen Ausführungsformen kann die Sensorik die Objekterkennung und/oder Sensoranordnung sein, aufweisen oder dieser entsprechen. In einigen Ausführungsformen kann die Objekterkennung und/oder die Sensoranordnung die Sensorik sein, aufweisen oder dieser entsprechen. Es kann aber auch vorgesehen sein, dass Sensorik und Objekterkennung voneinander verschieden sein können.

Die Sensorik kann eine oder mehrere aus Kamera, z.B. LIDAR, Wärmebildkamera, Lichtschranke, Radar, Bluetooth Low Energy, und/oder optische, akustische und/oder taktile Erfassungseinheit, oder dergleichen, umfassen. Die Sensorik kann mit einer oder der Steuereinheit verbunden sein, und/oder Daten austauschen.

Weitere Einzelheiten der Erfindung werden anhand der nachstehenden Figuren erläutert. Es zeigen:
- Fig.1: ein Ausführungsbeispiel eines erfindungsgemäßen Förderers;
- Fig. 2: ein Ausführungsbeispiel eines Fahrzeugs eines erfindungsgemäßen Förderers;
- Fig. 3: einen Aufnahmeförderer und ein Aufnahmeende eines erfindungsgemäßen Förderers;
- Fig. 4: ein Fahrzeug eines erfindungsgemäßen Förderers in einer Ansicht von unten und eine Antriebs- und Lenkeinheit eines Fahrzeugs;
- Fig, 5: einen Ausschnitt eines Übergabeförderers eines erfindungsgemäßen Förderers; und
- Fig. 6: ein Fahrzeug eines erfindungsgemäßen Förderers beim Verfahren in einen Container.

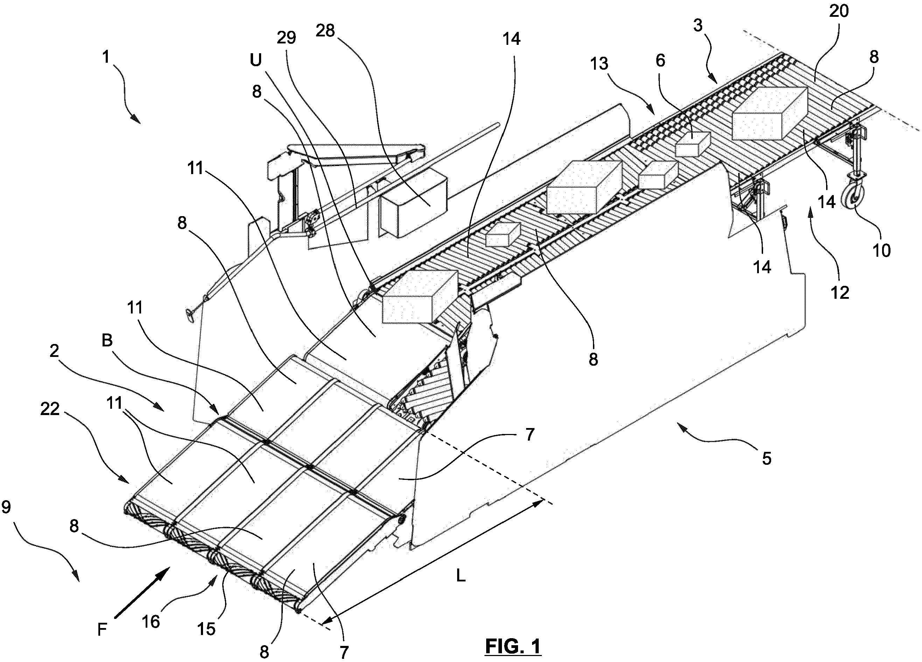

Figur 1 zeigt ein Ausführungsbeispiel eines erfindungsgemäßen Förderers 1.der Förderer 1 weist einen Aufnahmeförderer 2 und einen Abförderer 3 auf. Zwischen Aufnahmeförderer 2 und Abförderer 3 ist ein Übergabeförderer 4 angeordnet. Zumindest der Aufnahmeförderer 2 und der Übergabeförderer 4 sind als Fahrzeug 5 oder als Flurförderzeug ausgebildet. Der Aufnahmeförderer 2 weist ein höhenverstellbares Aufnahmeende 22 auf.

Auch wenn in der nachfolgenden Beschreibung auf ein Fahrzeug 5 abgestellt wird, kann entsprechend ein Flurförderzeug gemeint sein.

Der Förderer 1 kann zum Entladen von gestapeltem, geschüttetem oder lose gehäuftem Stückgut 6 verwendet sein oder werden. Beispielsweise kann auf einem Boden eines Laderaums 9 angeordnete Stückgut 6 von dem Aufnahmeförderer 2 und/oder dessen höhenverstellbaren Aufnahmeende 22 aufgenommen und/oder erfasst sein oder werden. Das Stückgut 6 kann anschließend von dem Aufnahmeförderer 2 zu dem Übergabeförderer 4 transportiert und/oder an diesen übergeben sein oder werden. Der Übergabeförderer 4 kann das Stückgut 6 zu dem Abförderer 3 transportieren und/oder an diesen übergeben.

Dadurch, dass Aufnahmeförderer 2 und Übergabeförderer 4 als Fahrzeug 5 oder als Flurförderzeug ausgebildet sind, können Aufnahmeförderer 2 und Übergabeförderer 4 mobil und flexibel verstellt sein oder werden. Insbesondere kann vorgesehen sein, dass das Fahrzeug 5 zwischen verschiedenen Entnahmestellen verfahren sein oder werden kann. In einigen Ausführungsformen kann der Abförderer 3 ebenfalls verstellbar und/oder verfahrbar sein. Beispielsweise kann der Abförderer 3 in einigen Ausführungsformen mit dem Fahrzeug 5 verbunden und/oder gekoppelt sein, und/oder von dem Fahrzeug 5 verfahren und/oder bewegt sein oder werden.

In einigen anderen Ausführungsformen kann an oder bei mindestens einer Entladestelle ein Abförderer 3 fest angeordnet sein, und das Fahrzeug 5 zu dem Abförderer 3 verfahren sein oder werden, und/oder mit dem Abförderer 3 gekoppelt sein oder werden.

In einigen Ausführungsformen kann das Fahrzeug 5 ein Flurförderzeug sein oder aufweisen.

Es kann vorgesehen sein, dass mit einem Fahrzeug 5 oder Flurförderzeug, bzw. dem Aufnahmeförderer 2 und Übergabeförderer 4 des Fahrzeugs 5 oder Flurförderzeug Stückgut 6 von mehr als einer Entladestelle an einen oder mehrere Abförderer 3 übergeben sein oder werden können.

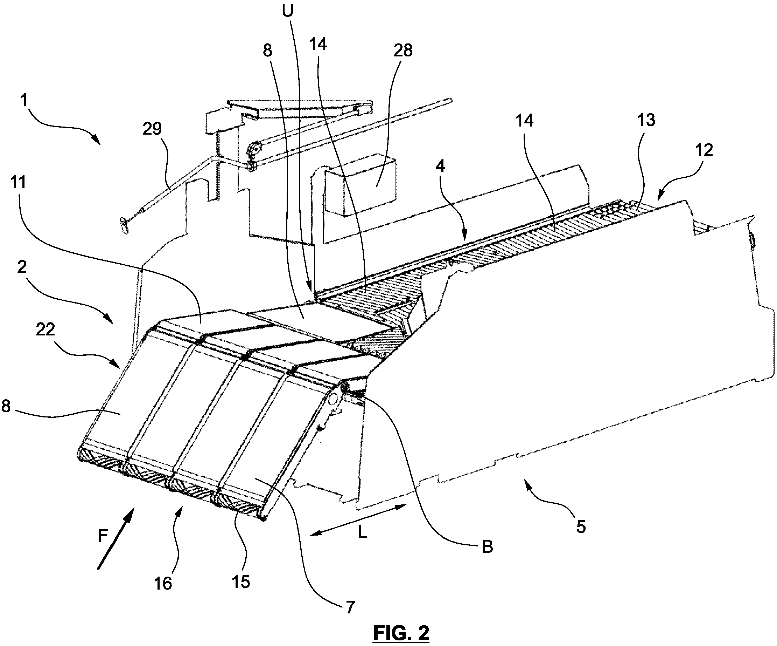

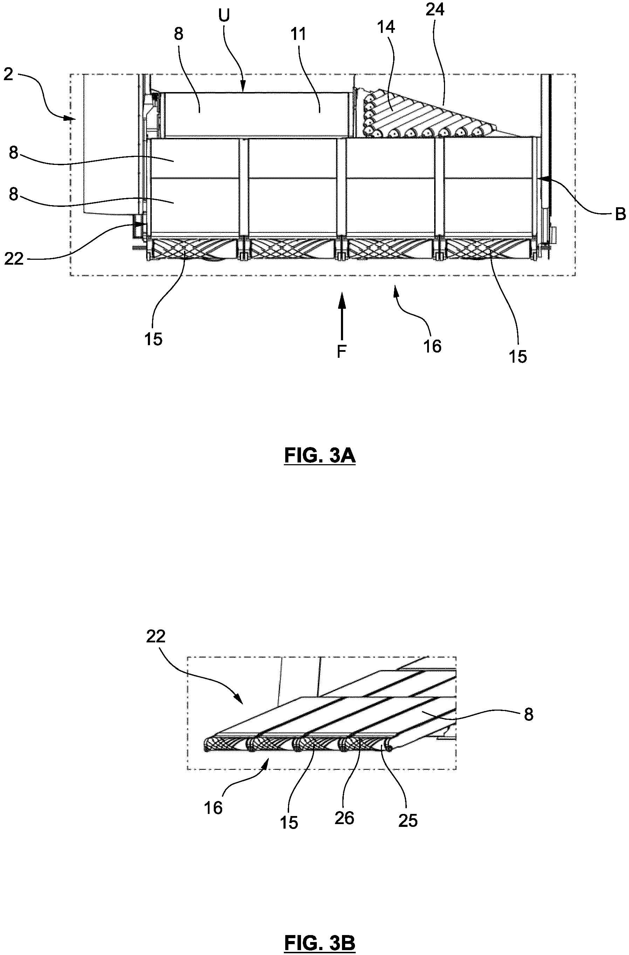

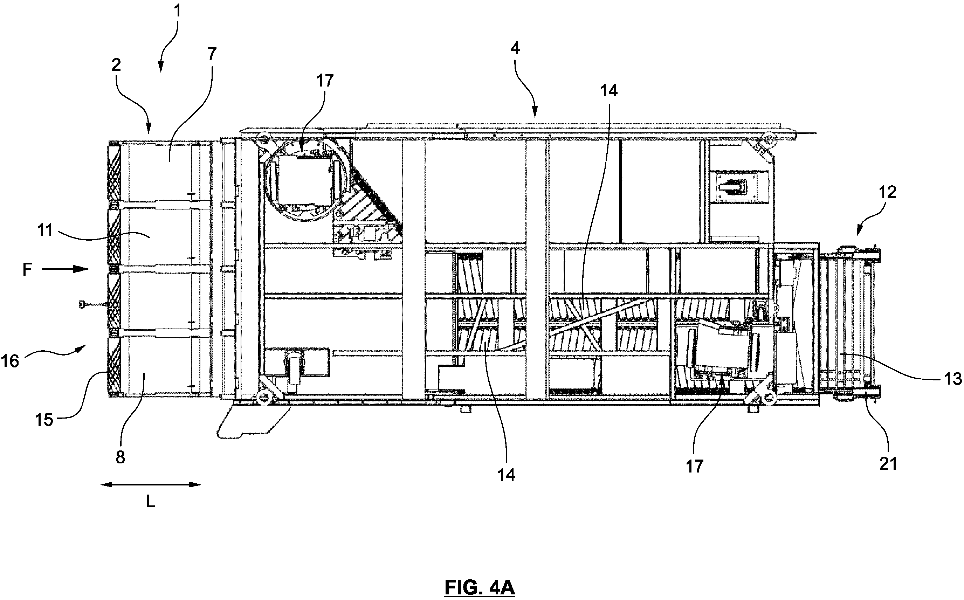

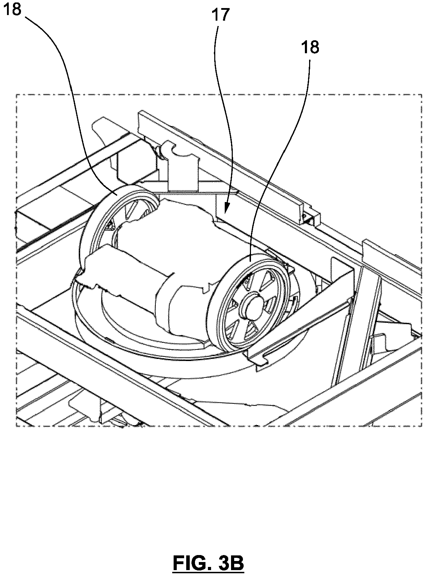

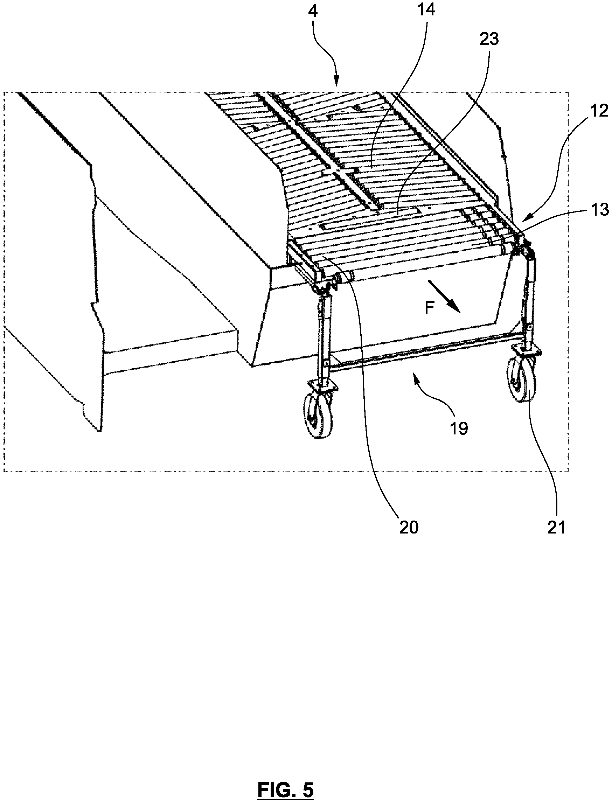

Ein beispielhaftes Fahrzeug 5 ist in Figur 2 gezeigt. Figur 4 zeigt ein beispielhaftes Fahrzeug 5 von unten, und eine Antriebs- und Lenkeinheit 17 eines Fahrzeugs 5 Das in Figur 2 und 4 gezeigte Fahrzeug 5 kann eines, mehrere oder alle Merkmale und/oder Vorteile des in Figur 1, 2 und 4 gezeigten Fahrzeugs 5 aufweisen. Ein Aufnahmeförderer 2 und ein Aufnahmeende 22 eines Aufnahmeförderer 2 ist beispielhaft in Figur 3 gezeigt. Der Aufnahmeförderer 2 und/oder das Aufnahmeende 22 kann eines, mehrere oder alle Merkmale und/oder Vorteile der in den Figuren 1 und 2 gezeigten Aufnahmeende 22 und/oder Aufnahmeförderer 2 aufweisen. Ein Ausschnitt eines Übergabeförderers 4 ist beispielhaft in Figur 5 gezeigt. Der in Figur 5 gezeigte Übergabeförderer 4 kann eines, mehrere oder alle Merkmale und/oder Vorteile des in den Figuren 1 und 2 gezeigten Übergabeförderers 4 aufweisen.

In einigen Ausführungsformen kann das Fahrzeug 5 mindestens eine Antriebs- und Lenkeinheit 17 aufweisen, vergleiche z.B. Figur 4.

Das Fahrzeug 5 kann eine Sensorik aufweisen. Die Sensorik kann dazu dienen, dass das Fahrzeug 5 halbautomatisch oder vollautomatisch fahren kann. Die Sensorik kann ein halbautomatisches oder vollautomatisches Fahren des Fahrzeugs 5 unterstützen. Beispielsweise kann die Sensorik dazu dienen, dass das Fahrzeug nicht gegen die Wände der Container fährt. Es kann vorgesehen sein, dass die Sensorik Hindernisse, Personen, Stückgüter, Wände und/oder Container erfassen und/oder erkennen kann. In einigen Ausführungsformen kann das Fahrzeug 5 zwischen einem halbautomatischen und einem vollautomatisch Fahrmodus umgeschaltet sein oder werden. Im halbautomatischen Fahrmodus kann vorgesehen sein, dass das Fahrzeug 5 durch eine Person, z.B. ein Bediener, der oder die beispielsweise auf dem Fahrzeug 5 sich befinden, stehen oder sitzen kann, und/oder durch eine externe Fernbedienung gesteuert und/oder gefahren ist oder wird.

Die Sensorik kann optische, akustische und/oder taktile Sensoren umfassen. Die Sensorik kann z.B. dazu eingerichtet sein, eine Lokalisation und/oder Kollisionsvermeidung im Laderaum, und/oder eine Lokalisation und Kollisionsvermeidung außerhalb des Laderaums, beispielsweise mit Personen zu vermeiden. Die Sensorik kann z.B. dazu eingerichtet sein, gestapelte und/oder lose gehäufte Stückgüter zur Entladung zu erkennen und/oder zu erfassen. Die Sensorik kann z.B. dazu eingerichtet sein, einzelner Hindernisse, z.B. im Umkreis zum Fahrzeug als auch unterhalb, beispielsweise in Gestalt von heruntergefallenen Stückgütern oder anderen Störobjekten, zu erfassen und/oder zu erkennen. Die Sensorik kann z.B. dazu eingerichtet sein, den Laderaum zu vermessen.

In einigen Ausführungsformen kann das Fahrzeug 5 zwei, drei, vier oder mehr Antriebs- und Lenkeinheit 17 aufweisen. Die Antriebs- und Lenkeinheit 17 kann mindestens ein Rad 18 aufweisen. In einigen Ausführungsformen kann die Antriebs- und Lenkeinheit 17 zwei Räder 18 aufweisen. In einigen Ausführungsformen kann die Antriebs- und Lenkeinheit 17 eines oder mehrere Omniwheels und/oder Mecanum-Räder aufweisen.

Die Antriebs- und Lenkeinheit 17, und/oder mindestens eine der Antriebs- und Lenkeinheit 17, kann dazu eingerichtet sein, dass Fahrzeug 5 zu bewegen und/oder zu verfahren. Das Fahrzeug 5 kann einen Motor (nicht in den Figuren gezeigt) aufweisen, der dazu eingerichtet sein kann, mindestens eine Antriebs- und Lenkeinheit 17 und/oder mindestens ein Rad 18 mindestens einer Antriebs- und Lenkeinheit 17, anzutreiben. Das Fahrzeug 5 kann eine (nicht in den Figuren gezeigte) Antriebskupplung und/oder Getriebe aufweisen, dass ein Drehmoment des Motors auf mindestens eine Antriebs- und Lenkeinheit 17 und/oder mindestens ein Rad 18 übertragen kann. Der Motor kann ein Elektromotor sein oder aufweisen.

In einigen Ausführungsformen kann vorgesehen sein, dass das Fahrzeug 5 einen (nicht in den Figuren gezeigten) Energiespeicher aufweisen kann, der dem Motor Energie zuführen und/oder Bereitstellen kann. Beispielsweise kann der Energiespeicher einen elektrischen Energiespeicher sein oder aufweisen. Der elektrische Energiespeicher kann eine oder mehrere Batterien und/oder Akkus sein oder aufweisen. Es kann vorgesehen sein, dass der Motor, insbesondere der Elektromotor, unabhängig von einer externen Energiequelle betrieben sein oder werden kann.

Der elektrische Energiespeicher kann ein Batteriespeicher sein oder aufweisen. In einigen Ausführungsformen kann vorgesehen sein, dass der elektrische Energiespeicher und/oder der Batteriespeicher nur für das Verfahren des Fahrzeugs 5 zwischen den Containern, aber nicht für den Betrieb der Sortier- und/oder Fördertechnik vorgesehen sein kann. In einigen Ausführungsformen kann der elektrische Energiespeicher und/oder der Batteriespeicher kann Steuergeräte mit Energie versorgen und/oder bestromen. In einigen Ausführungsformen kann der elektrische Energiespeicher und/oder der Batteriespeicher eine, mehrere oder alle Funktionseinheiten, Stromabnehmer, Strom und/oder Energie benötigende Geräte des Fahrzeugs 5, des Aufnahmeförderers 2 und/oder des Übergabeförderers 4 mit Energie und/oder Strom versorgen.

Das Fahrzeug 5 und/oder das Flurförderzeug kann mit mindestens einem angetriebenen Rad bewegt sein oder werden. Das Fahrzeug 5 und/oder das Flurförderzeug kann auf einem oder mehreren Rädern abrollen.

Ein oder das Rad 18, und/oder mindestens ein Rad 18, kann einen einstellbaren Lenkwinkel aufweisen. Der Lenkwinkel kann derjenige Winkel sein oder einem solchen entsprechen, unter dem das Fahrzeug 5 gelenkt sein oder werden kann. Der einstellbaren Lenkwinkel kann der Lenkung des Fahrzeugs 5 dienen. Der einstellbaren Lenkwinkel kann einen Winkelbereich von mindestens 90° haben. In einigen Ausführungsformen kann der Winkelbereich mehr als 90° und bis zu 180° betragen. In einigen anderen Ausführungsformen kann das Rad 18, und/oder die Antriebs- und Lenkeinheit 17, einen Lenkwinkel von mindestens 360° haben, und/oder frei und/oder beliebig drehbar sein.

Der Aufnahmeförderer 2 weist ein Aufnahmeende 22 auf. Das Aufnahmeende 22 kann mindestens ein Fördermittel 8 aufweisen. Das Fördermittel 8 kann beispielsweise ein Förderband 7, ein Bandförderer 11 und/oder einer Rollenbahn 14 sein oder aufweisen. Ein Förderband 7 und/oder ein Bandförderer 11 kann ein umlaufendes Band aufweisen. In einigen Ausführungsformen kann ein Bandförderer 11 eines oder mehrere Förderbänder 7 und/oder umlaufende Bänder aufweisen.

Wie insbesondere aus der Zusammenschau der Figuren 1 und 2 ersichtlich, ist das Aufnahmeende 22 höhenverstellbar. Insbesondere kann vorgesehen sein, dass das Aufnahmeende 22 derart verstellbar, insbesondere teleskopierbar, sein kann, dass eine Länge L des Aufnahmeende 22 in oder entgegen Förderrichtung F einstellbar sein kann. Es kann vorgesehen sein, dass das Aufnahmeende 22 in Förderrichtung F zusammengeschoben und/oder zusammengefahren sein oder werden kann. Es kann vorgesehen sein, dass das Aufnahmeende 22 entgegen der Förderrichtung F auseinandergefahren und/oder ausgestreckt sein oder werden kann.

Ist das Aufnahmeende 22 zurückgezogen, so kann das Fahrzeug 5 eine geringere Länge aufweisen als bei vorgefahrenem Aufnahmeende 22. Damit kann beispielsweise das Fahrzeug 5 platzsparend geparkt sein oder werden.

Es kann vorgesehen sein, dass durch Verstellen des höhenverstellbaren Aufnahmeende 22 ein Aufnahmewinkel des aufzunehmenden Stückguts 6 eingestellt sein oder werden kann. Der Aufnahmewinkel kann demjenigen Winkel des Aufnahmeende 22 zu einer Ebene, in der das aufzunehmende Stückgut 6 liegen und/oder angeordnet sein kann, entsprechen. Der Aufnahmewinkel kann ein spitzer Winkel sein. Es kann vorgesehen sein, dass der Aufnahmewinkel in Abhängigkeit der Abmaße und/oder des Gewichts des aufzunehmenden Stückguts 6 gewählt und/oder eingestellt sein oder werden kann.

Das höhenverstellbare Aufnahmeende 22 kann mindestens ein Paar von in einer Förderrichtung F des Aufnahmeendes 22 hintereinander und überlappend angeordnete Fördermittel 8, z.B. Förderbänder 7, aufweisen. Die hintereinander und überlappend angeordnete Fördermittel 8 können sich in einem Überlappungsbereich B überlappen. In einigen Ausführungsformen kann der Überlappungsbereich B von der Verstellung des Aufnahmeende 22 abhängen, und/oder in Abhängigkeit der Verstellung des Aufnahmeende 22 vorliegen, und/oder gewählt sein oder werden.

An, bei oder in dem Überlappungsbereich B kann sich eine in der Förderrichtung F abfallende Stufe ergeben.

Durch die Überlappungen kann beispielsweise ein Stückgut 6 von einem der Fördermittel 8, z.B. einem Förderband 7, zu einem nachgelagerten Fördermittel 8, z.B. ein nachgelagerten Förderband 7, des Aufnahmeende 22 sicher übergeben sein oder werden, und/oder ein hängen oder steckenbleiben des Stückgut 6 verhindert oder zumindest reduziert sein oder werden.

Wie beispielsweise in Figur 3 gezeigt, kann der Aufnahmeförderer 2 und/oder das Aufnahmeende 22 eine Führungsschiene 24 aufweisen. Die Führungsschiene 24 kann derart angeordnet sein, dass sie von einem oder mehreren Fördermittel 8 des Aufnahmeförderers 2 und/oder des Aufnahmeende 22 transportiertes Stückgut 6 in eine Richtung quer zur Förderrichtung F umlenken und/oder leiten kann. Damit kann beispielsweise ein Übergang in Querrichtung des Aufnahmeförderers 2 und/oder des Aufnahmeende 22 zu dem Übergabeförderer 4 ermöglicht sein oder werden, z.B. wenn der Übergabeförderer 4 in Querrichtung eine geringere Abmessung als der Aufnahmeförderer 2 und/oder das Aufnahmeende 22 aufweist. In einigen Ausführungsformen kann der Aufnahmeförderer 2 und/oder das Aufnahmeende 22 eine Fördermittel 8, beispielsweise eine Rollenbahn 14, aufweisen, die an und/oder bei der Führungsschiene 24 angeordnet sein kann, und im Zusammenspiel mit der Führungsschiene 24 ein Stückgut quer zur Förderrichtung F lenken und/oder leiten kann.

Es kann vorgesehen sein, dass die Führungsschiene 24 verfahrbar sein kann, um beispielsweise Stückgut zu vereinzeln und/oder auszurichten, und/oder um eine Rollenbahn 14, Fördermittel 8, und/oder Bandförderer 11 auszuwählen.

Das Fahrzeug 5, der Aufnahmeförderer 2 und/oder der Übergabeförderer 3 kann eine Vereinzelungseinheit aufweisen. Die Vereinzelungseinheit kann einen Greifer und/oder einen Knickarm oder dergleichen aufweisen. Die Vereinzelungseinheit kann dazu eingerichtet sein, Stückgut 6, das z.B. von oder mit dem Aufnahmeförderer 2, Übergabeförderer 3, Rollenbahn 14, Fördermittel 8, und/oder Bandförderer transportiert ist oder wird, zu vereinzeln oder zu manipulieren, z.B. greifen, zu schieben, zu ziehen, zu halten und/oder zu sperren. In einigen Ausführungsformen kann die Vereinzelungseinheit derart angeordnet sein, dass sie ein Stückgut 6, das auf oder mit dem Aufnahmeförderer 2, Übergabeförderer 3, Rollenbahn 14, Fördermittel 8, und/oder Bandförderer transportiert ist oder wird, vereinzeln kann. In einigen Ausführungsformen kann die Vereinzelungseinheit einem oder dem Manipulator 29 entsprechen, und/oder aufweisen. In einigen Ausführungsformen kann die Vereinzelungseinheit eines oder mehrere Merkmale eines oder des Manipulator 29 haben.

In einigen Ausführungsformen kann der Übergabeförderer 4 eine Abmessung quer zur Förderrichtung F zwischen 1 m und 3 m, bevorzugt von ungefähr 1,8 m haben. In einigen Ausführungsformen kann der Aufnahmeförderer 2 und/oder das Aufnahmeende 22 eine Abmessung quer zur Förderrichtung F zwischen 2 m und 6 m, bevorzugt von ungefähr 3,6 m haben.

An einem freien Ende und/oder distalen Ende 16 des Aufnahmeende 22 kann eine Aufnehmerwalze 15 angeordnet sein. Die Aufnehmerwalze 15 kann dazu dienen, ein aufzunehmende Stückgut 6 zu kontaktieren und/oder anzuheben. Die Aufnehmerwalze 15 kann ein aufzunehmende Stückgut 6 auf das Aufnahmeende 22, insbesondere ein Fördermittel 8 des Aufnahmeende 22, heben. Es kann vorgesehen sein, dass eine Umlaufgeschwindigkeit der Aufnehmerwalze 15 unabhängig eingestellt sein oder werden kann, insbesondere unabhängig von einem, mehreren oder allen Fördermitteln 8 des Aufnahmeende 22, des Aufnahmeförderers 2, des Übergabeförderers 4, des Abförderers 3 und/oder des Förderers 1.

Die Aufnehmerwalze 15 kann eine Strukturierung 26 aufweisen. Die Strukturierung 26 kann dazu dienen, einen Reibwert der Aufnehmerwalze 15 zu erhöhen. Damit kann ein Stückgut 6 besser von der Aufnehmerwalze 15 erfasst und/oder angehoben sein oder werden. Die Strukturierung 26 kann auf dem Walzenmantel 25 und/oder einer Oberfläche der Aufnehmerwalze 15 angeordnet sein. Die Strukturierung 26 kann beispielsweise eine Gravur und/oder Vertiefung der Aufnehmerwalze 15 sein oder aufweisen. In einigen Ausführungsformen kann die Strukturierung 26 eine oder mehrere Rillen umfassen. Die Strukturierung 26 kann beispielsweise rautenförmig oder diamantförmig sein. Es sind aber auch andere Formen denkbar.

Der Aufnahmeförderer 2 und/oder das Aufnahmeende 22 kann mindestens ein Fördermittel 8 aufweisen. Ein Fördermittel 8 kann beispielsweise ein Förderband 7, ein Bandförderer 11 und/oder einer Rollenbahn 14 sein oder aufweisen. In einigen Ausführungsformen kann das Aufnahmeende 22 mindestens zwei nebeneinander angeordnete Fördermittel 8, beispielsweise Förderbänder 7 und/oder Bandförderer 11, aufweisen. In einigen Ausführungsformen kann das Aufnahmeende 22 vier nebeneinander angeordnete Fördermittel 8, bei schrittweise Förderbänder 7 und/oder Bandförderer 11, aufweisen.

Es kann vorgesehen sein, dass an dem distalen Ende 16 mindestens eine Aufnehmerwalze 15 in Transportrichtung F vor mindestens einem Fördermittel 8 des Aufnahmeende 22 angeordnet sein kann. In einigen Ausführungsformen kann in Transportrichtung F vor jedem Fördermittel 8 des Aufnahmeende 22 eine entsprechende Aufnehmerwalze 15 angeordnet sein. Alternativ oder zusätzlich kann vorgesehen sein, dass mindestens eine Aufnehmerwalze 15 derart dimensioniert ist, insbesondere in einer Erstreckung quer zur Transportrichtung F, dass diese vor mehr als einem Fördermittel 8 angeordnet ist, und/oder sich über mehr als ein Fördermittel 8 quer erstreckt.

Weist der Förderer 1, der Aufnahmeförderer 2 und/oder das Aufnahmeende 22 mehr als eine Aufnehmerwalze 15 auf, so kann vorgesehen sein, dass mindestens zwei der Aufnehmerwalze 15 sich mit unterschiedlicher Umlaufgeschwindigkeit und/oder Umlaufbeschleunigung drehen und/oder unterschiedlich angesteuert sind oder werden. In einigen Ausführungsformen kann vorgesehen sein, dass eine Aufnehmerwalze 15 eine Umlaufgeschwindigkeit und/oder Umlaufbeschleunigung hat, die gleich und/oder unterschiedlich zu derjenigen Umlaufgeschwindigkeit und/oder Umlaufbeschleunigung der des entsprechend nachgelagerten Fördermittels 8 sein kann.

Der Übergabeförderer 4 kann mindestens ein Fördermittel 8 aufweisen. Das Fördermittel 8 kann beispielsweise ein Förderband 7, ein Bandförderer 11 und/oder einer Rollenbahn 14 sein oder aufweisen. Ein Förderband 7 und/oder ein Bandförderer 11 kann ein umlaufendes Band aufweisen. In einigen Ausführungsformen kann ein Bandförderer 11 eines oder mehrere Förderbänder 7 und/oder umlaufende Bänder aufweisen.

In einigen Ausführungsformen kann der Übergabeförderer 4 mindestens eine Rollenbahn 14 aufweisen. In einigen Ausführungsformen kann der Übergabeförderer 4 zwei in Transportrichtung F hintereinander angeordnete Rollenbahnen 14 aufweisen. Eine, mehrere oder alle Rollenbahn 14 können angetrieben sein. Eine, mehrere oder alle Rollenbahn 14 können nicht angetrieben sein. Eine Rollenbahn 14 kann eine Laufrolle, eine Leichtrolle und/oder Tragrolle aufweisen. Mindestens eine Laufrolle, Leichtrolle und/oder Tragrolle kann angetrieben sein. Mindestens eine Laufrolle, Leichtrolle und/oder Tragrolle kann nicht angetrieben sein.

Der Übergabeförderer 4 und/oder die Rollenbahn 14 kann eine Scherenrollenbahn sein oder aufweisen. In einigen Ausführungsformen kann der Übergabeförderer 4 alternativ oder zusätzlich ein Bandförderer oder ein System aus mehreren parallel und/oder hintereinander angeordneten Einzelförderern sein oder aufweisen. In einer Ausführungsform kann der Übergabeförderer 4 aus einem zellularen Rollen-, Omniwheel, Gurt- oder Kugelrollensystem bestehen und/oder eines oder mehrere dieser aufweisen.

Der Aufnahmeförderer 2 und/oder der Übergabeförderer 4 können parallel zur Förderrichtung F mehrere nebeneinander angeordnete, unabhängig voneinander angetriebene Fördermittel 8 aufweist. Die Fördermittel 8 können eine unabhängig voneinander einstellbare Fördergeschwindigkeit in der Förderrichtung F aufweisen. Ein Fördermittel 8 kann ein Förderband 7, ein Bandförderer 8 und/oder eine Rollenbahn 14 sein oder aufweisen.

In einigen Ausführungsformen kann ein Stau von Stückgütern 6 und/oder eine Überladung mit Stückgütern erfasst sein oder werden. Bei einem erfassten Stau von zu transportierenden Stückgütern 6 und/oder einer erfassten Überladung mit zu transportierenden Stückgütern 6 kann vorgesehen sein, eine Relativgeschwindigkeit der mehreren nebeneinander angeordneten Fördermittel 8 zu erhöhen. Damit kann der Stau und/oder die Überladung aufgelöst sein oder werden, oder zumindest teilweise aufgelöst sein oder werden.

Alternativ oder zusätzlich kann vorgesehen sein, bei einem erfassten Stau auf dem Übergabeförderer 4 von zu transportierenden Stückgütern 6, und/oder bei einer erfassten Überladung des Übergabeförderers 4 mit zu transportierenden Stückgütern 6, eine Fördergeschwindigkeit des Aufnahmeförderers 2 zu verringern oder zeitweise auf null herabzusetzen.

In einigen Ausführungsformen kann der Förderer 1 für die Stauerfassung, und/oder die Erfassung einer Überladung, mindestens eine Objekterkennung aufweisen. Die Objekterkennung kann beispielsweise eine Kamera, vorzugsweise mindestens eine Kamera mit einer Bildverarbeitung, sein oder aufweisen. Alternativ oder zusätzlich können z.B. eine oder mehrere Lichtschranken vorgesehen sein. In einigen Ausführungsformen kann alternativ oder zusätzlich auch vorgesehen sein, dass eines, mehrere oder alle der Stückgüter 6 einen Transponder oder dergleichen aufweisen, und der Förderer 1 ein oder mehrere entsprechende Receiver zur Erkennung und/oder Identifizierung der Stückgüter 6 aufweist.

Die Objekterkennung kann dazu eingerichtet sein, wenigstens einen Übergangsbereich U zwischen dem Aufnahmeförderer 2 und dem Übergabeförderer 4 zu überwachen. Die Objekterkennung kann beispielsweise geeignet an oder bei dem Förderer 1, und/oder dem Fahrzeug 5 angeordnet sein.

Der Übergabeförderer 4 und/oder der Aufnahmeförderer 2 können jeweils, oder in Summe, mehrere Fördermittel 8, vorzugsweise Bandförderer 11, aufweisen. Die Fördermittel 8 können zumindest teilweise in einer oder der Förderrichtung F der Fördermittel 8 hintereinander angeordnet sein. Eine Fördergeschwindigkeit von mindestens zwei der Fördermittel 8 kann unabhängig voneinander einstellbar sein. In einigen Ausführungsformen kann das in der Förderrichtung F weiter stromabwärts angeordnete Fördermittel 8 eine höhere Fördergeschwindigkeit als das in der Förderrichtung F weiter stromaufwärts angeordnete Fördermittel 8 aufweisen.

Mindestens drei der Fördermittel 8 des Übergabeförderers 4 und/oder des Aufnahmeförderers 2 können in Förderrichtung F hintereinander angeordnet sein. Es kann vorgesehen sein, dass die jeweilige Fördergeschwindigkeit der mindestens drei Fördermittel 8 in Förderrichtung F ansteigend sein kann.

An einem in Transportrichtung F nachgelagerten distalen Ende 19 des Übergabeförderers 4 kann eine Kupplung 12 vorgesehen sein. Die Kupplung 12 kann einen Rollenbahnabschnitt 13 aufweisen. Das Fahrzeug 5 kann die Kupplung 12 aufweisen. Die Kupplung 12 kann dazu dienen, das Fahrzeug 5 mit dem Abförderer 3 zu verbinden. In einigen Ausführungsformen kann die Kupplung 12 dazu dienen, den Abförderer 3 mit dem Fahrzeug 5 zu schleppen und/oder eine Schleppverbindung zwischen Abförderer 3 und Fahrzeug 5 bereitzustellen. Beispielsweise kann der Abförderer 3 in die Kupplung 12 und/oder den Rollenbahnabschnitt 13 eingehängt sein oder werden. Damit kann in einigen Ausführungsformen eine Schleppverbindung zwischen Abförderer 3 und Fahrzeug 5 vorliegen oder sich ergeben.

Der Rollenbahnabschnitt 13 kann als starr verbundener Rollenbahnabschnitt 13 in Förderrichtung F des Übergabeförderers 4 von dem Übergabeförderer 4 vorstehen.

Die Kupplung 12 und/oder der Rollenbahnabschnitt 13 kann unmittelbar angrenzend an eine stromabwärtsseitige Umlenkrolle 23 eines Fördermittels 8, und/oder eine oder der Rollenbahn 14, des Übergabeförderers 4 angeordnet sein. Die Kupplung 12 kann starr mit dem Übergabeförderer 4 verbunden sein. Die Kupplung 12 und/oder der Rollenbahnabschnitt 13 kann von dem Übergabeförderer 4 abstehen, beispielsweise in Förderrichtung F.

Die Kupplung 12 und/oder der Rollenbahnabschnitt 13 kann mindestens eine angetriebene oder unangetriebene Tragrolle 20 aufweisen. Die Kupplung 12 und/oder der Rollenbahnabschnitt 13 kann mindestens eine Stützrolle 21 aufweisen, die beim Verfahren des Fahrzeugs 5 auf dem Boden abrollen kann. Die Stützrolle 21 kann die Kupplung 12 und/oder den Rollenbahnabschnitt 13 stützen. Die Stützrolle 21 kann beispielsweise an einem distalen Ende 19 des Rollenbahnabschnitt 13 angeordnet sein.

Der Abförderer 3 kann fest und/oder unbeweglich angeordnet sein. Alternativ oder zusätzlich kann der Abförderer 3 verfahrbar und/oder mobil sein. Beispielsweise kann der Abförderer 3 eine oder mehrere Lenkrollen 10 aufweisen, mit denen der Abförderer 3 verfahrbar sein kann. Es kann vorgesehen sein, dass eine, mehrere oder alle der Lenkrollen 10 antriebslos sein können.

Es kann vorgesehen sein, dass der Abförderer 3 mit dem Fahrzeug 5 über die Kupplung 12 verbunden sein oder werden kann. Der Abförderer 3 kann von dem Fahrzeug 5 verfahren, und/oder geschleppt sein oder werden. Die Kupplung 12 kann eine Schleppverbindung bilden. Über den Rollenbahnabschnitt 13 der Kupplung 12 kann ein Stückgut 6 von dem Übergabeförderer 4 an den Abförderer 3 transportiert und/oder übergeben sein oder werden.

Der Abförderer 3 kann ein oder das Stückgut 6 abfördern, beispielsweise an einen Bestimmungsort, und/oder an einen nicht in den Figuren gezeigten Sorter und/oder eine nicht in den Figuren gezeigte Endstelle transportieren und/oder übergeben.

Der Abförderer 3 kann ein mobiler Flex-Conveyor sein oder aufweisen. Der Abförderer 3 kann eine mobile Scherenrollenbahn sein oder aufweisen. Alternativ oder zusätzlich kann der Abförderer 3 mindestens ein Fördermittel 8 aufweisen. Das Fördermittel 8 kann beispielsweise ein Förderband 7, ein Bandförderer 11 und/oder eine Rollenbahn 14 sein oder aufweisen.

In einigen Ausführungsformen kann der Förderer 1, und/oder die Einheit aus Aufnahmeförderer 2, Abförderer 3 und Übergabeförderer 4, eine Mehrzahl Bandförderer 11 und/oder angetriebene Rollenbahnen 14 aufweisen. Zumindest einige dieser können kaskadenförmig zueinander angeordnet sein. Es kann vorgesehen sein, dass Stückgut auf oder mit dem Förderer 1, Aufnahmeförderer 2, Abförderer 3 und Übergabeförderer 4, vereinzelt sein oder werden kann. Beispielsweise kann Stückgut durch eine oder mehrere der Bandförderer 11 und/oder Rollenbahnen 14 zuerst nach außen und dann nach wieder nach innen gefördert werden. Eine Vereinzelung kann in einigen Ausführungsformen auch dadurch erfolgen und/oder ermöglicht sein, dass einer, mehrere oder alle der Bandförderer 11 und/oder Rollenbahnen 14 in Teilabschnitten aufgeteilt sein können. Die Teilabschnitte können unterschiedliche Geschwindigkeiten aufweisen, so dass Stückgut vereinzelt sein oder werden kann. Die Vereinzelung kann durch einen oder den Sensor, Sensoranordnung, Sensorik und/oder Objekterkennung, z.B. eine Kamera, überwacht, eingestellt und/oder erfasst sein oder werden. Alternativ oder zusätzlich kann die Vereinzelung durch einen oder den Bediener überwacht und/oder eingestellt werden.

Zumindest einige der Bandförderer 11, vorzugsweise sämtliche der Bandförderer 11, können in einer oder der Förderrichtung F der Bandförderer 8 kaskadenförmig abfallend zueinander angeordnet sein.

Der Förderer 1 und/oder das Fahrzeug 5 kann eine Steuereinheit 28 aufweisen. Die Steuereinheit 28 kann dazu eingerichtet sein, eine Geschwindigkeit und/oder Beschleunigung eines, mehrerer oder aller Fördermittel 8, z.B. eines, mehrerer oder aller Förderbänder 7, Bandförderer 11 und/oder Rollenbahn 14, des Förderers 1 und/oder des Fahrzeugs 5 einzustellen und/oder zu steuern. In einigen Ausführungsformen kann die Steuereinheit 28 dazu eingerichtet sein, eine Geschwindigkeit und/oder Beschleunigung eines, mehrere oder aller Aufnehmerwalze 15 einzustellen und/oder zu steuern. Es kann vorgesehen sein, eines, mehrere oder alle Fördermittel 8 und/oder Aufnehmerwalze 15 individuell und/oder separat anzusteuern. Die Steuereinheit 28 kann ein Interface aufweisen, über das ein Bediener und/oder Benutzer, z.B. ein Fabrikarbeiter oder Lagerarbeiter, Steuerbefehle an die Steuereinheit 28 übermitteln kann. Es kann vorgesehen sein, dass die Steuereinheit 28 externe Meldungen, externe Nachrichten, externe Steuerbefehle, externe Anweisungen oder dergleichen verarbeiten kann, die beispielsweise von einem Leitsteuerungssystem an die Steuereinheit 28 übermittelt sein oder werden können. Derartige Meldungen können beispielsweise Bedienerhinweise zum nächsten anzusteuernden Container enthalten.

In einigen Ausführungsformen kann der Förderer 1 und/oder das Fahrzeug 5 einen Manipulator 29 aufweisen. Der Manipulator 29kann in einigen Ausführungsformen manuell und/oder händisch von einem Bediener und/oder Benutzer z.B. einem Fabrikarbeiter oder Lagerarbeiter, betätigt sein oder werden. Alternativ oder zusätzlich kann der Manipulator 29 von der Steuereinheit 28 und/oder dem Bediener bzw. Benutzer gesteuert ein oder werden. Der Manipulator 29 kann dazu dienen, einzelnes Stückgut zu manipulieren, z.B. zu greifen, ziehen und/der schieben. Mit dem Manipulator 29 kann z.B. Stückgut aus einem Container zumindest teilweise herausgezogen sein oder werden, und/oder Stückgut gelöst sein oder werden. In einigen Ausführungsformen kann der Manipulator 29 alternativ oder zusätzlich der Vereinzelung von Stückgut 6 dienen, und/oder dazu eingerichtet sein. Der Manipulator 29 kann in einigen Ausführungsformen eine oder die Vereinzelungseinheit sein oder aufweisen.

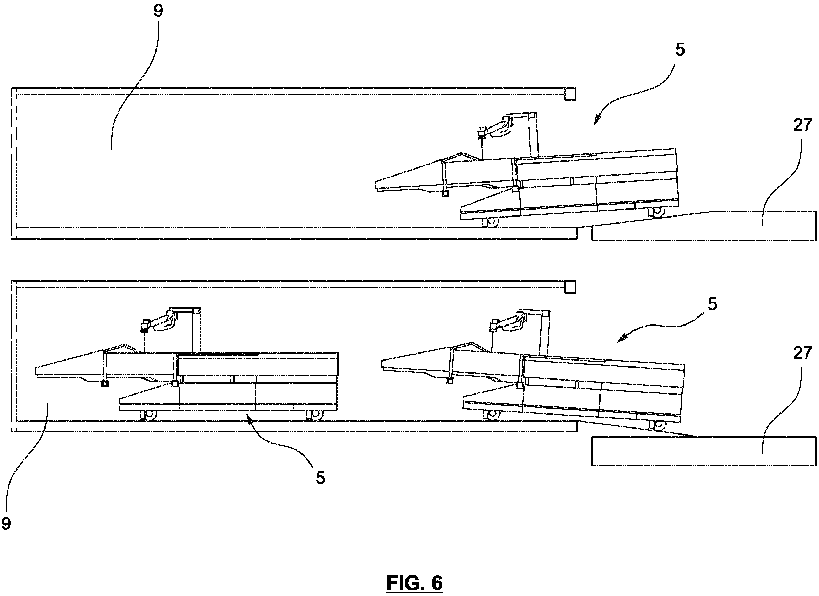

Es kann vorgesehen sein, dass der Förderer 1, das Fahrzeug 5 und/oder der Aufnahmeförderer 2 höhenverstellbare sein kann. Die beispielsweise in Figur 6 gezeigt, kann durch Höhenverstellung des Fahrzeugs 5, und/oder des Förderers 1, einen Höhenunterschied zwischen einem Container 9, in dem z.B. aufzunehmendes Stückgut 6 liegen oder angeordnet sein kann, und einem Boden 27 zu überbrücken. Damit kann beispielsweise das Fahrzeug 5 in den Container 9 verfahren sein oder werden, um Stückgut 6 aufzunehmen.

In einigen Ausführungsformen kann die Höheneinstellung durch die Steuereinheit 28 eingestellt, vorgegeben, gesteuert und/oder eingestellt sein oder werden. In einigen Ausführungsformen kann die Höheneinstellung durch einen oder den Benutzer oder Bediener erfolgen. Beispielsweise kann der Förderer 1, das Fahrzeug 5 und/oder der Aufnahmeförderer 2 eine Betätigungseinheit, z.B. ein Display oder ein Touch-Display, einen Hebel, einen oder mehrere Schalter oder Knöpfe, oder dergleichen aufweisen, die der Benutzer oder Bediener betätigen kann, um eine entsprechende Höhe einzustellen.

In einigen Ausführungsformen kann vorgesehen sein, dass der Förderer 1 und/oder das Fahrzeug 5 um eine Höhendifferenz von 450 mm zwischen einer minimalen Höhe und einer maximalen Höhe verstellt sein oder werden kann. In einigen Ausführungsformen kann der Förderer 1 und/oder das Fahrzeug 5 derart höhenverstellbare sein, dass ein Steigungswinkel von -7°bis + 7°, beispielsweise einer Rampe oder eines Gefälles, überwunden sein oder werden kann.

Damit kann eine Vielzahl verschiedener Container 9 mit beispielsweise verschiedenen Höhen über und/oder unter dem Boden 27 von dem Förderer 1 und/oder dem Fahrzeug 5 flexibel entladen sein oder werden, bzw. entsprechend in den Container 9 befindliche Stückgüter 6 flexibel aufgenommen sein oder werden.

In einigen Ausführungsformen kann eine automatische Entladung, und/oder selbstständige Entladung, eines oder mehrerer Container 9 vorgesehen sein. Das Fahrzueg 5 kann beispielsweise automatisch und/oder selbstständig zu dem Container 9 fahren, und dort mit dem Aufnahmeförderer 2 Stückgut 6 aufnehmen. Das aufgenommene Stückgut 6 kann dann über den Übergabeförderer 4 an einen Abförderer 3 übergeben werden. Dazu kann das Fahrzeug 5 automatisch und/oder selbstständig zu dem Abförderer 3 fahren. In einigen Ausführungsformen kann der zu entladende Container 9 und/oder der zu beladendende Abförderer 3 vorgegeben sein oder werden, beispielsweise von der Steuereinheit 28 und/oder einem oder dem Leitsteuerungssystem.

In einigen Ausführungsformen kann vorgesehen sein, dass der Förderer 1 zum Beladen eines Containers 9 verwendet und/oder eingesetzt werden kann. Beispielsweise kann Stückgut 6 von dem Abförderer 3 bereitgestellt sein oder werden, das an den Übergabeförderer 4 übergeben und mit dem Aufnahmeförderer 2 in einem Container 9 entladen oder befüllt sein oder werden kann.

Die in den Ansprüchen, der Beschreibung und den Figuren offenbarten Merkmale können einzeln oder in beliebiger Kombination für die Verwirklichung der Erfindung wesentlich sein.

### Bezugszeichenliste

- 1: Förderer
- 2: Aufnahmeförderer
- 3: Abförderer
- 4: Übergabeförderer
- 5: Fahrzeug / Flurförderzeug
- 6: Stückgut
- 7: Förderband
- 8: Fördermittel
- 9: Laderaum
- 10: Lenkrolle
- 11: Bandförderer
- 12: Kupplung
- 13: Rollenbahnabschnitt
- 14: Rollenbahn
- 15: Aufnehmerwalze
- 16: distales Ende
- 17: Antriebs- und Lenkeinheit
- 18: Rad
- 19: distales Ende
- 20: Tragrolle
- 21: Stützrolle
- 22: Aufnahmeende
- 23: Umlenkrolle
- 24: Führungsschiene
- 25: Walzenmantel
- 26: Strukturierung
- 27: Boden
- 28: Steuereinheit
- 29: Manipulator

- F: Förderrichtung
- L: Länge
- B: Überlappungsbereich
- U: Übergangsbereich

## Patentansprüche

1. Förderer (1) zum Entladen von auf einem Boden eines Laderaums (9) gestapeltem, geschüttetem, oder lose gehäuftem Stückgut (6), mit einem Aufnahmeförderer (2), der ein höhenverstellbares Aufnahmeende (22) aufweist, einem Abförderer (3) und einem zwischen dem Aufnahmeförderer (2) und dem Abförderer (3) angeordneten Übergabeförderer (4), **dadurch gekennzeichnet, dass** zumindest der Aufnahmeförderer (2) als Fahrzeug (5) oder als Flurförderzeug ausgebildet ist.

2. Förderer (1) nach Anspruch 1, bei dem das Fahrzeug (5) oder das Flurförderzeug den Übergabeförderer (4) aufweist, und/oder bei dem zumindest der Aufnahmeförderer (2) und der Übergabeförderer (4) als Fahrzeug (5) oder als Flurförderzeug ausgebildet sind.

3. Förderer (1) nach Anspruch 1 oder 2, bei dem das Fahrzeug (5) oder das Flurförderzeug mindestens eine Antriebs- und Lenkeinheit (17) mit mindestens einem angetriebenen Rad (18) aufweist, auf dem das Fahrzeug (5) oder das Flurförderzeug abrollt.

4. Förderer (1) nach Anspruch 3, bei dem das Rad (18) einen einstellbaren Lenkwinkel aufweist, wobei ein Winkelbereich, innerhalb welcher der Lenkwinkel einstellbar ist, vorzugsweise wenigstens 90° und besonders bevorzugt mehr als 90° und bis zu 180° beträgt.

5. Förderer (1) nach Anspruch 3 oder 4, bei dem das mindestens eine angetriebene Rad (18) von einem Elektromotor angetrieben ist, wobei der Förderer (1) einen elektrischen Energiespeicher aufweist, sodass der Elektromotor unabhängig von einer externen Energiequelle des Förderers (1) betrieben werden kann.

6. Förderer (1) nach einem der vorangegangenen Ansprüche, bei dem der Abförderer (3) ein mobiler Flex-Conveyor, vorzugsweise eine mobile Scherenrollenbahn, ist, der vorzugsweise in Schleppverbindung mit dem von dem Aufnahmeförderer (2) und dem Übergabeförderer (4) gebildeten Fahrzeug (5) oder Flurförderzeug steht.

7. Förderer (1) nach einem der vorangegangenen Ansprüche, bei dem das Fahrzeug (5) oder das Flurförderzeug in Förderrichtung (F) des Übergabeförderers (4) stromabwärts unmittelbar angrenzend an eine stromabwärtsseitige Umlenkrolle (23) eines Fördermittels (8) des Übergabeförderers (4) eine Kupplung (12) zur Verbindung des Abförderers (3) mit dem Übergabeförderer (4) aufweist, wobei die Kupplung (12) als ein starr mit dem Übergabeförderer (4) verbundener Rollenbahnabschnitt (13) mit mindestens einer angetriebenen oder unangetriebenen Tragrolle (20) oder Leichtrolle ausgebildet ist.

8. Förderer (1) nach einem der vorangegangenen Ansprüche, bei dem der Abförderer (3) angetrieben oder antriebslos ist, vorzugsweise eine Scherenrollenbahn mit angetriebenen und/oder antriebslosen Tragrollen (20) oder Leichtrollen.

9. Förderer (1) nach einem der vorangegangenen Ansprüche, bei dem das höhenverstellbare Aufnahmeende (22) in einer Förderrichtung (F) des Aufnahmeendes (22) teleskopierbar ist.

10. Förderer (1) nach einem der vorangegangenen Ansprüche, bei dem das höhenverstellbare Aufnahmeende (22) mindestens ein Paar von in einer Förderrichtung (F) des Aufnahmeendes (22) hintereinander und überlappend angeordnete Förderbänder (7) aufweist.

11. Förderer (1) nach Anspruch 10, bei der das höhenverstellbare Aufnahmeende (22) in einem Überlappungsbereich (B) des mindestens einen Paars hintereinander und überlappend angeordneter Förderbänder (7) eine in der Förderrichtung (F) abfallende Stufe aufweist.

12. Förderer (1) nach Anspruch 10 oder 11, bei dem die Förderbänder (7) eine konstante Länge aufweisen und in der Förderrichtung (F) relativ zueinander verstellbar sind, sodass eine Länge (L) des Aufnahmeendes (22) in der Förderrichtung (F) einstellbar ist.

13. Förderer (1) nach einem der Ansprüche, bei dem der Förderer (1) eine Mehrzahl Bandförderer (11) und/oder angetriebene Rollenbahnen (14) aufweist, von denen zumindest einige kaskadenförmig zueinander angeordnet sind.

14. Förderer (1) nach Anspruch 13, bei dem zumindest einige der Bandförderer (11), vorzugsweise sämtliche der Bandförderer (11), in einer Förderrichtung (F) der Bandförderer (11) kaskadenförmig abfallend zueinander angeordnet sind.

15. Förderer (1) nach einem der vorangegangenen Ansprüche, bei dem der Übergabeförderer (4) und/oder der Aufnahmeförderer (2), jeweils oder in Summe, mehrere Fördermittel (8), vorzugsweise Bandförderer (11), aufweist, wobei die Fördermittel (8) zumindest teilweise in einer Förderrichtung (F) der Fördermittel (8) hintereinander angeordnet sind, wobei eine Fördergeschwindigkeit von mindestens zwei der Fördermittel (8) unabhängig voneinander einstellbar ist, wobei vorzugsweise das in der Förderrichtung (F) weiter stromabwärts angeordnete Fördermittel (8) eine höhere Fördergeschwindigkeit als das in der Förderrichtung (F) weiter stromaufwärts angeordnete Fördermittel (8) aufweist.

16. Förderer (1) nach Anspruch 15, bei dem mindestens drei der Fördermittel (8) in der Förderrichtung (F) hintereinander angeordnet sind, wobei die jeweilige Fördergeschwindigkeit der mindestens drei Fördermittel (8) in der Förderrichtung (F) ansteigend ist.

17. Förderer (1) nach einem der vorangegangenen Ansprüche, bei dem der Aufnahmeförderer (2) einen Bandförderer (11) mit mindestens einem umlaufenden Band und vorzugsweise mehreren umlaufenden Bändern aufweist und an seinem distalen, freien Ende (16) eine angetriebene Aufnehmerwalze (15) aufweist.

18. Förderer (1) nach Anspruch 17, bei dem die Aufnehmerwalze (15) unabhängig von dem Bandförderer (11) des Aufnahmeförderers angetrieben ist und vorzugsweise an ihrem Walzenmantel (25) eine Strukturierung (26) zur Erhöhung des Reibwerts des Walzenmantels aufweist, vorzugsweise rautenförmige Rillen.

19. Förderer (1) nach einem der vorangegangenen Ansprüche, bei dem der Aufnahmeförderer (2) und/oder der Übergabeförderer (4) parallel zur Förderrichtung (F) mehrere nebeneinander angeordnete, unabhängig voneinander angetriebene Fördermittel (8), vorzugsweise Bandförderer (11), aufweist, welche eine unabhängig voneinander einstellbare Fördergeschwindigkeit in der Förderrichtung (F) aufweisen.

20. Förderer (1) nach Anspruch 19, der dazu eingerichtet ist, bei einem erfassten Stau von zu transportierenden Stückgütern (6) oder einer erfassten Überladung mit zu transportierenden Stückgütern (6) eine Relativgeschwindigkeit der mehreren nebeneinander angeordneten Fördermittel (8) zu erhöhen.

21. Förderer (1) nach einem der vorangegangenen Ansprüche, der dazu eingerichtet ist, bei einem erfassten Stau auf dem Übergabeförderer (4) von zu transportierenden Stückgütern (6) oder einer erfassten Überladung des Übergabeförderers (4) mit zu transportierenden Stückgütern (6) eine Fördergeschwindigkeit des Aufnahmeförderers (2) zu verringern oder zeitweise auf Null herabzusetzen.

22. Förderer (1) nach Anspruch 20 oder 21, bei dem der Förderer (1) für die Stauerfassung oder die Erfassung einer Überladung mindestens eine Objekterkennung, vorzugsweise mindestens eine Kamera mit einer Bildverarbeitung, aufweist, wobei die Objekterkennung dazu eingerichtet ist, wenigstens einen Übergangsbereich (U) zwischen dem Aufnahmeförderer (2) und dem Übergabeförderer (4) zu überwachen.

23. Förderer (1) nach einem der vorangegangenen Ansprüche, bei dem das Fahrzeug (5) dazu eingerichtet ist, vollautomatisch und/oder halbautomatisch verfahren zu werden.

24. Förderer (1) nach einem der einem der vorangegangenen Ansprüche, bei dem der Förderer (1), bevorzugt das Fahrzeug (5), eine Sensorik aufweist, die dazu eingerichtet ist, Hindernisse, bevorzugt Wände, Container, Personen, und/oder Stückgut, zu erfassen.
